# EUROPÄISCHE PATENTSCHRIFT

(11) **EP 2 688 932 B1**
(45) Veröffentlichungstag und Bekanntmachung des Hinweises auf die Patenterteilung: **29.04.2015**
(21) Anmeldenummer: 12710709.2
(22) Anmeldetag: 21.03.2012
(51) Int. Cl.: C08G 18/10, C08G 18/12

(54) **FORMTEILE AUS VERSTÄRKTEN POLYURETHANHARNSTOFF-ELASTOMEREN UND DEREN VERWENDUNG**
MOULDED PARTS CONSISTING OF REINFORCED POLYURETHANE UREA ELASTOMERS AND USE THEREOF
PIÈCES MOULÉES EN ÉLASTOMÈRES DE POLYURÉTHANE-URÉE RENFORCÉS ET LEUR UTILISATION

(30) Priorität: 24.03.2011 DE 102011006051
(43) Veröffentlichungstag der Anmeldung: 29.01.2014
(73) Patentinhaber: Bayer Intellectual Property GmbH, 40789 Monheim am Rhein (DE)
(72) Erfinder: EISEN, Norbert, 50999 Köln (DE); REITER, Stephan, 40764 Langenfeld (DE); GAUMITZ, Dieter, 50170 Kerpen (DE)
(74) Vertreter: BIP Patents
(86) Internationale Anmeldenummer: PCT/EP2012/054968
(87) Internationale Veröffentlichungsnummer: WO 2012/126934

(56) Entgegenhaltungen:
- EP-A1- 1 004 606
- EP-A2- 0 267 603
- EP-A2- 0 512 347
- DE-A1- 10 160 375

## Beschreibung

Die Erfindung betrifft mit Verstärkungsstoffen ausgerüstete Formteile aus Polyurethanharnstoff-Elastomeren mit bestimmten Harnstoff- und Urethananteilen sowie deren Verwendung.

Die Herstellung von Polyurethanharnstoff-Elastomeren durch Umsetzung von NCO-Semiprepolymeren mit Gemischen aus aromatischen Diaminen sowie höhermolekularen Hydroxy- oder Aminogruppen enthaltenden Verbindungen ist bekannt und beispielsweise in EP-A 225 640 beschrieben. Um bestimmte mechanische Eigenschaften bei den daraus hergestellten Formkörpern zu erreichen, müssen den Reaktionskomponenten Verstärkungsstoffe zugesetzt werden, wodurch insbesondere thermomechanische Eigenschaften verbessert und der Biege-Elastizitäts-Modul erheblich angehoben wird. Durch den Einsatz dieser Verstärkungsstoffe ändern sich jedoch auch die Längs- und Querschwindungseigenschaften bei den hergestellten Formkörpern.

Wünschenswert sind daher verstärkte Polyurethanharnstoff-Elastomere, die bei der Herstellung von flächigen Formkörpern, wie Kotflügel, Türen oder Heckklappen von Automobilen ein annähernd isotropes Verhalten aufzeigen, d.h. möglichst geringe unterschiedliche Längs- und Querschwindungseigenschaften zeigen.

Darüber hinaus sollen sich die aus den verstärkten Polyurethan-Elastomeren hergestellten Formkörper leicht und mit einem möglichst geringen Zusatz an Trennhilfsmitteln von den Formen trennen lassen, um möglichst hohe Taktzeiten durch ein trennfreundliches System zu gewährleisten.

In der EP-A 1004 606 wurden durch Anheben der Funktionalität der Polyolreaktionenskomponente auf 4 bis 8 und der Funktionalität der Polyolkomponente, die bei der Herstellung der Isocyanat-Prepolymerkomponente eingesetzt wurde, auf 3 bis 8 gute Trenneigenschaften der verstärkten PUR-Harnstoffelastomeren erhalten.

Bei hohen Gehalten an Polyharnstoffsegmenten im Elastomer (bereits bei 85 bis 90 Mol.-% bezogen auf Mol.-% eines NCO-Äquivalents) zeigt das Elastomer starke Versprödung. Solche Formteile zerbrechen leicht bei Biegebeanspruchung.

Ein speziell in der Automobilindustrie immer wichtiger werdender Faktor ist die Gewichtseinsparung. Die Dichte und damit das Gewicht eines Formteils kann bei den Polyurethanharnstoff-Elastomeren durch die Menge des in die Form eingebrachten Reaktionsgemischs in einem gewissen Bereich gesteuert werden. Im Allgemeinen handelt es sich bei den Formkörpern allerdings um mikrozellulare Elastomere, d.h. um keine echten Schaumstoffe mit einer mit dem bloßen Auge sichtbaren Schaumstruktur. Dies bedeutet, dass gegebenenfalls mitverwendete organische Treibmittel weniger die Funktion eines echten Treibmittels als vielmehr die Funktion eines Fließmittels ausüben. Eine merkliche Reduzierung der Dichte durch einen erhöhten Gehalt an Treibmittel und eine geringere Eintragsmenge in die Form ist prinzipiell möglich. In der Praxis stellt dies allerdings keine praktikable Möglichkeit zu einer signifikanten Gewichtsreduzierung dar, da schon bei geringfügig stärkerem Anschäumen der mikrozellularen Elastomere speziell der Biege-Elastizitäts-Modul auf ein nicht mehr akzeptables Niveau fällt.

Die Dichte der resultierenden Formkörper hängt selbstverständlich auch in starkem Maß von der Art und dem Gewichtsanteil der mitverwendeten Füllkörper ab. In EP-A 0 639 614 wird beschrieben, wie durch den Einsatz von hohlen Mikrokugeln aus Glas oder Keramik eine Reduzierung der Dichte erzielt werden kann. Dabei kommt sowohl die vergleichsweise geringe Dichte der hohlen Mikrokugeln selbst zum Tragen als auch die Eigenschaft der Mikrokugeln, eine höhere Gasbeladung des Polyols (A-Komponente) zu ermöglichen, woraus ein stärkeres Aufschäumen resultiert. Obwohl zusätzlich zu den hohlen Mikrokugeln noch Mineralfasern als Verstärkungsstoffe eingesetzt werden, zeigt sich der Nachteil dieses Verfahrens darin, daß nur Formteile hergestellt werden können, die relativ niedrige Biege-Elastizitäts-Moduli aufweisen. Es werden zahlreiche Beispiele angeführt, wobei der höchste erzielte Biege-Elastizitäts-Modul 486 MPa beträgt. Für Karosserie-Bauteile in der Automobilindustrie sind allerdings in der Regel Werte von mindestens 600 MPa, in bestimmten Anwendungen sogar 1000 MPa zwingend erforderlich. In EP-A 0 639 614 werden verschiedene Verstärkungsstoffe wie Glasfasern oder Glasflakes, Glimmer, Wollastonit, Ruß, Talkum, Calciumcarbonat und Carbonfasern genannt. Es findet sich allerdings kein Hinweis, auf welche Weise deutlich höhere Biege-Elastizitäts-Moduli erzielt werden können, ohne dabei die Dichte signifikant erhöhen zu müssen.

In EP-A 0 267 603 wird beschrieben, wie durch den Einsatz von relativ geringen Mengen an Carbonfasern als Verstärkungsstoff Polyurethanharnstoff-Elastomere erhalten werden können, die hinsichtlich ihrer Eigenschaften mit Elastomeren vergleichbar sind, die mit deutlich höheren Mengen an Glasfasern verstärkt sind. Die durchschnittliche Faserlänge der dabei eingesetzten Carbonfasern beträgt 0,3 bis 0,4 mm. In der Praxis hat sich allerdings gezeigt, daß faserförmige Füllstoffe mit Faserlängen von größer 0,2 mm extrem schwierig zu verarbeiten sind. Speziell die im RIM-Verfahren eingesetzten Düsen neigen dabei zu Verstopfung, was extreme Druckschwankungen an den Hochdruck-Mischköpfen und damit eine schwankende Vermischungsqualität von sogenannter A-Komponente und B-Komponente zur Folge hat. Aus diesem Grund ist bei kontinuierlicher Produktion keine ausreichende Prozess-Sicherheit gegeben, was aber gerade bei der Fließband-Produktion in der Automobilindustrie unabdingbar ist.

Aufgabe war es daher, Formteile zur Verfügung zu stellen, die gute thermomechanische Eigenschaften aufweisen, eine im Vergleich zu gängigen Polyurethanharnstoff-Elastomeren signifikant geringere Dichte aufweisen, einen Biege-Elastizitäts-Modul von mindestens 600 MPa besitzen, eine geringe Anisotropie zeigen, gute Trenneigenschaften und geringe Standzeiten aufweisen. Um die Prozess-Sicherheit zu gewährleisten, dürfen keine faserförmigen Verstärkungsstoffe mit einer durchschnittlichen Faserlänge von größer 0,2 mm eingesetzt werden.

Diese Aufgabe konnte überraschenderweise dadurch gelöst werden, dass ein Polyurethanharnstoff-Elastomer einer bestimmten Zusammensetzung mit speziellen hohlen Mikrokugeln und Carbonfasern einer bestimmten Länge ausgerüstet wurde.

Gegenstand der vorliegenden Erfindung sind daher mit Verstärkungsstoffen ausgerüstete Polyurethanharnstoff-Elastomere mit einem Harnstoffanteil von 70 bis 95 Mol-% und einem Urethananteil von 5 bis 30 Mol-%, jeweils bezogen auf Mol-% eines NCO-Äquivalents, erhältlich durch Umsetzung eines Reaktionsgemisches aus einer
A-Komponente aus
   A1) aromatischen Diaminen, die zumindest in jeweils einer ortho-Stellung zu den Aminogruppen einen Alkylsubstituenten aufweisen,
   A2) mindestens einer aliphatischen Komponente bestehend aus mindestens einem Hydroxyl- und/oder primäre Aminogruppen aufweisenden Polyether- und/oder Polyesterpolyol mit einem zahlenmittleren Molekulargewicht von 500 bis 18 000 und einer Funktionalität von 3 bis 8 und
   A3) gegebenenfalls Katalysatoren und/oder gegebenenfalls Zusatzstoffen
sowie isocyanatgruppenhaltigem Prepolymer als B-Komponente aus der Reaktion von
   B1) einer Polyisocyanatkomponente aus der Gruppe bestehend aus Polyisocyanaten und Polyisocyanatgemischen der Diphenylmethanreihe und verflüssigten Polyisocyanaten der Diphenylmethanreihe mit
   B2) mindestens einer Polyolkomponente mit einem zahlenmittleren Molekulargewicht von 500 bis 18 000 und einer Funktionalität von 2,7 bis 8 aus der Gruppe bestehend aus gegebenenfalls organische Füllstoffe enthaltenden Polyetherpolyolen und gegebenenfalls organische Füllstoffe enthaltenden Polyesterpolyolen,
dadurch gekennzeichnet, dass die Komponente A und/oder Komponente B hohle, harte Mikrokugeln (C) und Carbonfasern (D) enthält.

Durch die hohlen, harten Mikrokugeln (C) wird die Dichte der Polyurethanharnstoff-Elastomere signifikant reduziert, ohne dass dazu ein stärkeres Aufschäumen mit den damit verbundenen, genannten Nachteilen notwendig ist. Durch die Carbonfasern (D) werden die erforderlichen thermomechanischen Eigenschaften und insbesondere der notwendige Biege-Elastizitäts-Modul erreicht. Die mit den Carbonfasern hergestellten erfindungsgemäßen Formteile weisen im Vergleich zu Formteilen, die mit Glasfasern oder Mineralfasern hergestellt werden, eine niedrigere Dichte bei gleichem Biege-Elastizitäts-Modul auf.

Es ist dem durchschnittlichen Fachmann bekannt, dass faserförmige Verstärkungsstoffe aufgrund ihrer Ausrichtung in Fließrichtung des Reaktionsgemisches zu einem anisotropen Schwindungsverhalten der Formteile führen, d.h. unterschiedlich starke Schwindung längs und quer zur Fließrichtung und damit zur Faserrichtung. Entsprechend findet man mit faserförmigen Verstärkungsstoffen auch unterschiedlich große thermische Längenausdehnungs-Koeffizienten sowie Biege-Elastizitäts-Moduli längs und quer zur Faserrichtung. Ein stark anisotrop ausgeprägtes Schwindungsverhalten kann zu einem Verzug der Formteile nach der Herstellung führen, eine stark anisotrop ausgeprägte thermische Längenausdehnung kann zu einem Verzug der Formteile bei höheren Gebrauchstemperaturen führen. Beides ist unerwünscht, weshalb immer eine möglichst geringe Anisotropie anzustreben ist.

Werden hohle, harte Mikrokugeln zusammen mit einer Mineralfaser wie beispielsweise Tremin 939-304 (Wollastonit, Fa. Quarzwerke Frechen) eingesetzt, zeigt sich erwartungsgemäß eine signifikant unterschiedliche Schwindung in Längs- und Querrichtung. Überraschenderweise ist dieses anisotrope Schwindungsverhalten bei der erfindungsgemäßen Verwendung von hohlen, harten Mikrokugeln zusammen mit Carbonfasern weit weniger ausgeprägt, was speziell hinsichtlich der Verzugsproblematik von flächigen Formteilen einen immensen Vorteil darstellt.

Die A-Komponente und die B-Komponente werden in einem solchen Mengenverhältnis umgesetzt, dass die Isocyanatkennzahl des erhaltenen Elastomeren bevorzugt im Bereich von 80 bis 120 liegt und die über die B-Komponente eingebrachte Polyolkomponente B2) 10 bis 90 Mol-% des Urethananteils darstellt.

Bevorzugt werden verstärkte Polyurethan-Elastomere mit einem Harnstoffanteil von 75 bis 90 Mol-% und einem Urethananteil von 10 bis 25 Mol-%, bezogen auf Mol-% eines NCO-Äquivalents eingesetzt.

Es ist weiterhin bevorzugt, dass die A-Komponente und die B-Komponente in einem solchen Mengenverhältnis umgesetzt werden, dass die Isocyanatkennzahl des erhaltenen Elastomeren bevorzugt im Bereich von 90 bis 115 liegt und die über die B-Komponente eingebrachte Polyolkomponente B2) 30 bis 85 Mol-% des Urethananteils darstellt.

Als Carbonfasern (D) (C-Fasern, Kohlefasern) können beispielsweise die gemahlenen Kohlefaser-Typen Sigrafil® C10 M250 UNS und Sigrafil® C30 M150 UNS von der Fa. SGL Carbon oder Tenax®-A HT M100 100mu und Tenax®-A HT M100 60mu von der Fa. Toho Tenax Europe GmbH oder CFMP-150 90µm von der Firma NIPPON POLYMER SANGYO CO., LTD., erhältlich bei der Fa. Dreychem, eingesetzt werden. Bevorzugt sind Kohlefasern mit einer durchschnittlichen Länge der Fasern von 60 bis 200 µm, besonders bevorzugt 90 bis 200 µm, insbesondere 90 bis 150 µm.

Die Kohlefasern werden üblicherweise in Mengen von 1 bis 20 Gew.-%, bevorzugt 1 bis 15 Gew.-%, besonders bevorzugt 1 bis 10 Gew.-% und insbesondere bevorzugt 3 bis 7 Gew.-%, bezogen auf die Gesamtmenge der Komponenten A, B, C und D, im erfindungsgemäßen Formteil eingesetzt.

Wie oben beschrieben wird eine sogenannte A-Komponente mit einer sogenannten B-Komponente umgesetzt, wobei bevorzugt die A-Komponente die Kohlefasern (D) enthält.

Als Komponente (C) werden erfindungsgemäß harte, hohle Mikrokugeln (rigid hollow microspheres, microballoons, microbubbles) eingesetzt, die eine für die Verarbeitung nach dem RIM-Verfahren ausreichende Wärme- und Druckbeständigkeit besitzen. Geeignete harte, hohle Mikrokugeln können aus anorganischen Materialien wie beispielsweise Glas, Keramik und Kohlenstoff oder aus harten, organischen Polymeren wie beispielsweise Phenolharzen bestehen. Hohle, anorganische Mikrokugeln können nach bekannten Verfahren hergestellt werden. Die Herstellung von Glashohlkugeln ist beispielsweise in U.S. Patent 3,365,315 und U.S. Patent 2,978,339 beschrieben.

Im Allgemeinen sind keramische, hohle Mikrokugeln bei vergleichbarer Größe schwerer als Glashohlkugeln. In der vorliegenden Erfindung sind daher Mikro-Glashohlkugeln bevorzugt. Bevorzugt sind Glashohlkugeln mit Dichten von 0,05 bis 0,8 g/cm³, besonders bevorzugt von 0,1 bis 0,7 g/cm³, ganz besonders bevorzugt von 0,3 bis 0,7 g/cm³, insbesondere bevorzugt 0,6 g/cm³.

Kommerziell erhältliche hohle, anorganische Mikrokugeln sind beispielsweise keramische Z-Light Spheres und 3M™ Glass Bubbles™ K46, S60, S60HS und iM30K von der Fa. 3M. Kommerziell erhältliche Glashohlkugeln enthalten typischerweise etwa 72 Gew.-% SiO₂, 14 Gew.-% Na₂O, 10 Gew.-% CaO, 3 Gew.-% MgO und 1 Gew.-% Al₂O₃/K₂O/Li₂O. Keramische, hohle Mikrokugeln enthalten dagegen typischerweise etwa 50-58 Gew.-% SiO₂, 25-30 Gew.-% Al₂O₃, 6-10 Gew.-% CaO, 1-4 Gew.-% Na₂O/K₂O und 1-5 Gew.-% andere Oxide. Weitere Informationen finden sich in J. F. Plummer, "Microspheres" in Encyclopedia of Polymer Science and Technology, Vol. 9 (John Wiley & Sons, Inc., 1987), Seite 788.

Typischerweise setzt sich eine bestimmte Qualität von hohlen Mikrokugeln aus einem gewissen Bereich an Größen zusammen, man spricht auch von einer Größenverteilung. Für die vorliegende Erfindung geeignete Mikrokugeln haben typischerweise einen Durchmesser von etwa 9 bis etwa 120 µm, bevorzugt 9-65 µm, besonders bevorzugt 9-30 µm. Der jeweilige optimale Größenbereich der Mikrokugeln hängt auch von den bei der Verarbeitung nach dem RIM-Verfahren vorliegenden Maschinenparametern, wie beispielsweise dem Düsendurchmesser, ab.

Die Mikro-Glashohlkugeln können sowohl der A-Komponente als auch der B-Komponente zugegeben werden, wobei die Zugabe zur A-Komponente bevorzugt ist. Die Mikrokugeln werden in einer solchen Menge zugegeben, dass das fertige Produkt einen Mikrokugel-Gehalt von 0,5 bis 40 Gew.-%, bevorzugt 2-30 Gew.-%, besonders bevorzugt 5-20 Gew.-% und insbesondere bevorzugt 5-15 Gew.-% aufweist.

Als Komponente A1) kommen aromatische Diamine in Betracht, die zumindest in jeweils einer ortho-Stellung zu den Aminogruppen einen Alkylsubstituenten aufweisen und die ein Molekulargewicht von 122 bis 400 besitzen. Besonders bevorzugt sind solche aromatischen Diamine, die in ortho-Stellung zu der ersten Aminogruppe mindestens einen Alkylsubstituenten und in ortho-Stellung zu der zweiten Aminogruppe zwei Alkylsubstituenten mit jeweils 1 bis 4, vorzugsweise 1 bis 3 Kohlenstoffatomen aufweisen. Ganz besonders bevorzugt sind solche, die in jeweils mindestens einer ortho-Stellung zu den Aminogruppen einen Ethyl-, n-Propyl- und/oder iso-Propylsubstituenten und gegebenenfalls in weiteren ortho-Stellungen zu den Aminogruppen Methylsubstituenten aufweisen. Beispiele für derartige Diamine sind 2,4-Diaminomesitylen, 1,3,5-Triethyl-2,4-diaminobenzol sowie dessen technische Gemische mit 1-Methyl-3,5-diethyl-2,6-diaminobenzol oder 3,5,3',5'-Tetraisopropyl-4,4'-diaminodiphenylmethan. Selbstverständlich können die Gemische untereinander ebenfalls eingesetzt werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatischen Hydroxyl- und/oder primäre Aminogruppen aufweisenden Polyether- oder Polyesterpolyol der Molmasse 500 bis 18 000, bevorzugt 1000 bis 16 000, vorzugsweise 1500 bis 15 000. Die Komponente A2) besitzt die zuvor erwähnten Funktionalitäten. Die Polyetherpolyole können in an sich bekannter Art durch Alkoxylierung von Startermolekülen oder deren Gemischen entsprechender Funktionalität hergestellt werden, wobei zur Alkoxylierung insbesondere Propylenoxid und Ethylenoxid verwendet werden. Geeignete Starter bzw. Startergemische sind Succrose, Sorbit, Pentaerythrit, Glycerin, Trimethylolpropan, Propylenglykol sowie Wasser. Bevorzugt sind solche Polyetherpolyole, deren Hydroxygruppen zumindest zu 50 %, vorzugsweise mindestens zu 70 %, insbesondere ausschließlich aus primären Hydroxygruppen bestehen.

Als Polyesterpolyole kommen insbesondere solche in Betracht, die sich aufbauen aus den dafür bekannten Dicarbonsäuren, wie Adipinsäure, Phthalsäure, sowie den mehrwertigen Alkoholen, wie Ethylenglykol, 1,4-Butandiol und gegebenenfalls anteilig Glycerin und Trimethylolpropan.

Solche Polyether- und Polyesterpolyole sind beispielsweise beschrieben in Kunststoffhandbuch 7, Becker/Braun, Carl Hanser Verlag, 3. Auflage, 1993.

Weiterhin können als Komponente A2) primäre Aminogruppen aufweisende Polyether- und/oder Polyesterpolyole eingesetzt werden, wie sie beispielsweise beschrieben werden in EP-A 219 035 und als ATPE (Amino-terminierte Polyether) bekannt sind.

Insbesondere eignen sich als Aminogruppen aufweisende Polyether- und/oder Polyesterpolyole die sogenannten Jeffamine® der Firma Huntsman, die aufgebaut sind aus α,ω-Diaminopolypropylenglykolen.

Als Komponente A3) können die bekannten Katalysatoren für die Urethan- und Harnstoffreaktion eingesetzt werden, wie tertiäre Amine oder die Zinn(II)- oder Zinn(IV)-Salze höherer Carbonsäuren. Als weitere Zusatzstoffe kommen Stabilisatoren, wie die bekannten Polyethersiloxane oder Trennmittel, wie Zinkstearat, zum Einsatz. Die bekannten Katalysatoren oder Zusatzstoffe sind beispielsweise beschrieben in Kapitel 3.4 des Kunststoffhandbuchs J. Polyurethane, Carl Hanser Verlag (1993), S. 95 bis 119 und können in den üblichen Mengen eingesetzt werden.

Die sogenannte B-Komponente stellt ein NCO-Prepolymer auf Basis der Polyisocyanatkomponente B1) und der Polyolkomponente B2) dar und weist einen NCO-Gehalt von 8 bis 32 Gew.-%, vorzugsweise 12 bis 26 Gew.-%, besonders bevorzugt von 12 bis 25 Gew.-%, mehr bevorzugt von 14 bis 25 Gew.-%, insbesondere bevorzugt von 14 bis 20 Gew.-% auf.

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, für die Gemische, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisoeyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate modifizierte Di- und/oder Polyisocyanate oder beliebige Gemische derartiger Polyisocyanate.

Als Komponente B2) geeignet sind insbesondere die dieser Definition entsprechenden Polyether- oder Polyesterpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 33 83 351, 33 04 273, 35 23 093, 31 10 695, DE-PS 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293 oder 25 50 796). Grundsätzlich sind als Komponente B2) Polyetherpolyole oder Polyesterpolyole der bereits oben unter A2) genannten Art geeignet, sofern sie den zuletzt genannten Kenndaten entsprechen.

Die Polyolkomponente B2) weist eine mittlere Molmasse von bevorzugt 1000 bis 16 000, insbesondere 2000 bis 16 000, bei einer mittleren Hydroxyfunktionalität von 2,7 bis 8, bevorzugt 2,7 bis 7 auf.

Zur Herstellung der NCO-Semiprepolymeren B) werden vorzugsweise die Komponenten B1) und B2) in solchen Mengenverhältnissen zur Reaktion gebracht (NCO-Überschuss), dass NCO-Semiprepolymere mit dem oben genannten NCO-Gehalt resultieren. Die diesbezügliche Umsetzung erfolgt im Allgemeinen innerhalb des Temperaturbereichs von 25 bis 100°C. Bei der Herstellung der NCO-Semiprepolymeren wird vorzugsweise die Gesamtmenge der Polyisocyanatkomponete B1) mit vorzugsweise der Gesamtmenge der zur Herstellung der NCO-Semiprepolymeren vorgesehenen Komponente B2) umgesetzt.

Die Herstellung der erfindungsgemäßen Elastomeren erfolgt nach der bekannten Reaktionsspritzgusstechnik (RSG-Verfahren, "RIM-process"), wie sie beispielsweise in DE-AS 2 622 951 (US 4 218 543) oder DE-OS 39 14 718 beschrieben ist. Die Mengenverhältnisse der Komponenten A und B entsprechen hierbei den stöchiometrischen Verhältnissen mit einer NCO-Kennzahl von 80 bis 120. Im Allgemeinen handelt es sich bei den erfindungsgemäßen Formkörpern um mikrozellulare Elastomere, d.h. um keine echten Schaumstoffe, bei denen die Schaumstruktur mit dem bloßen Auge erkennbar ist. Dies bedeutet, dass gegebenenfalls mitverwendete organische Treibmittel weniger die Funktion eines echten Treibmittels als vielmehr die Funktion eines Fließmittels ausüben.

Die Menge des in die Form eingebrachten Reaktionsgemischs wird so bemessen, dass die Formkörper eine Dichte von 0,7 bis 1,1 g/cm³, bevorzugt 0,8 bis 1,1 g/cm³, besonders bevorzugt 0,9 bis 1,1 g/cm³ und insbesondere bevorzugt 0,9 bis 1,0 g/cm³ aufweisen.

Die Zusammensetzung des Polyurethanharnstoff-Elastomers (Komponenten A und B) und die Gehalte an hohlen, harten Mikrokugeln und Carbonfasern werden so gewählt, daß das verstärkte Elastomer einen Biege-Elastizitäts-Modul längs zur Faserrichtung von mindestens 600 MPa, bevorzugt mindestens 700 MPa, besonders bevorzugt mindestens 800 MPa, ganz besonders bevorzugt mindestens 900 MPa und insbesondere bevorzugt mindestens 1000 MPa aufweist.

Die Ausgangstemperatur des in die Form eingebrachten Reaktionsgemischs aus den Komponenten A) und B) liegt im Allgemeinen bei 20 bis 80, vorzugsweise 30 bis 70°C. Die Temperatur der Form liegt im Allgemeinen bei 30 bis 130, vorzugsweise 40 bis 80°C. Bei den zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im Allgemeinen nach einer Formstandzeit von 5 bis 180 Sekunden entformt werden. Gegebenenfalls schließt sich an die Entformung ein Tempern bei einer Temperatur von ca. 60 bis 180°C während eines Zeitraums von 30 bis 120 Minuten an.

Die so hergestellten, vorzugsweise flächigen PU-Formkörper, eignen sich insbesondere zur Herstellung von flexiblen Automobilstoßstangen bzw. von flexiblen Karosserieelementen wie Türen und Heckklappen, Kotflügeln, Heck- und Frontschürzen von Automobilen.

Die Erfindung soll anhand der nachfolgenden Beispiele näher erläutert werden.

### Beispiele

### Ausgangsmaterialien

### Prepolymer 1:

52,8 Gew.-Teile eines Gemisches aus 80 Gew.-% 4,4'-Diisocyanatodiphenylmethan, 10 Gew.-% 2,4'-Diisocyanatodiphenylmethan und 10 Gew.-% 3-Kern-MDI wurden bei 90°C mit 47,2 Gew.-Teilen des Polyetherpolyols 1 umgesetzt.

### NCO-Gehalt nach 2 Stunden: 15,4 %

### Polyol 1:

Polyetherpolyol der OH-Zahl 48 und Funktionalität 2,8, hergestellt durch Umsetzung eines Gemisches aus Glycerin als trifunktionellem Starter und 1,2-Propylenglycol als difunktionellem Starter mit Propylenoxid/Ethylenoxid im Verhältnis 90:10.

### Polyol 2:

Polyetherpolyol der OH-Zahl 28, hergestellt durch Propoxylierung von Sorbit als hexafunktionellem Starter und anschließende Ethoxylierung im Verhältnis 83:17 mit überwiegend primären OH-Gruppen.

### DETDA:

Mischung aus 80 Gew.-% 1-Methyl-3,5-diethyl-2,4-diaminobenzol und 20 Gew.-% 1-Methyl-3,5-diethyl-2,6-diaminobenzol.

### Jeffamin D 400:

aliphatisches Diamin der Fa. Huntsman

### DABCO 33 LV:

1,4-Diazabicyclo[2.2.2]octan (33 Gew.-% in Dipropylenglycol) der Fa. Air Products

### Tremin 939-304:

Wollastonit der Fa. Quarzwerke Frechen

### Carbonfaser:

Tenax®-A HT M100 100mu der Fa. Toho Tenax Europe GmbH (Schnittlänge 100µm)

### Mikro-Glashohlkugeln:

### 3M™ Glass Bubbles™ iM30K der Fa. 3M

Die Verarbeitung der im Folgenden beschriebenen Rezepturen erfolgte durch Reaktionsspritzgusstechnik. Die A- und die B-Komponente wurden in einem Hochdruckdosiergerät nach intensiver Vermischung in einem zwangsgesteuerten Mischkopf in ein geheiztes Plattenwerkzeug einer Formtemperatur von 60°C der Abmessungen 300 x 200 x 3 mm über einen Staubalkenanguss gedrückt.

Die Temperatur der A-Komponente betrug 65°C, die Temperatur der B-Komponente betrug 50°C.

Die mechanischen Werte wurden nach Tempern von 30 Minuten bei 120°C in einem Umlufttrockenschrank und anschließender Lagerung von 24 Stunden gemessen.

Vor jeder Serie wurde das Werkzeug mit dem Formtrennmittel EWOmold 5408 der Fa. KVS Eckert & Woelk GmbH behandelt.

### Polyolformulierung 1:

Polyol 2 51,53 Gew.-%

DETDA 42,0 Gew.-%

Zn-Stearat 2,75 Gew.-%

Jeffamin D 400 3,45 Gew.-%

DABCO 33 LV 0,16 Gew.-%

Dimethylzinn-bis-2,2-dimethyloctanoat 0,11 Gew.-%

OH-Zahl 288,7

### Beispiel 1

Es wurden 29,10 Gew.-Teile 3M™ Glass Bubbles™ iM30K und anschließend 14,55 Gew.-Teile Tenax®-A HT M100 100mu in 100 Gew.-Teile der Polyolformulierung 1 eingerührt und diese Mischung mit 147,37 Gew.-Teilen des Prepolymers 1 unter den für die RIM-Technik üblichen Verarbeitungsbedingungen in eine auf 60°C geheizte Form der Größe 300 x 200 x 3 mm gespritzt (Index 105). Das Formteil wurde nach 30 s entformt.

### Vergleichsbeispiel 2

Es wurden 33,89 Gew.-Teile 3M™ Glass Bubbles™ iM30K und anschließend 57,61 Gew.-Teile Tremin 939-304 in 100 Gew.-Teile der Polyolformulierung 1 eingerührt und diese Mischung mit 147,37 Gew.-Teilen des Prepolymers 1 unter den für die RIM-Technik üblichen Verarbeitungsbedingungen in eine auf 60°C geheizte Form der Größe 300 x 200 x 3 mm gespritzt (Index 105). Das Formteil wurde nach 30 s entformt.

Die mechanischen Eigenschaften wurden wie folgt bestimmt:
Rohdichte gemäß DIN 53 420
Biege-Elastizitäts-Modul (Biege-E-Modul) gemäß ASTM 790
Zugfestigkeit gemäß DIN 53 504
Dynstat bei -25°C gemäß DIN 53 435-DS (Tieftemperatur-Zähigkeit)
Der Biege-E-Modul wurde jeweils längs und quer zur Fließrichtung/Faserrichtung bestimmt.

Als Maß für die Isotropie wurde ein Anisotropie-Faktor definiert. Es handelt sich dabei um den Quotienten aus den Biege-E-Moduli längs und quer zur Faserrichtung. Je höher der Faktor ist, desto stärker ist die Anisotropie ausgeprägt.

**Tabelle 1: Mechanische Eigenschaften**

| | **Füllstoff [Gew.-%]** | **Rohdichte [kg/m³]** | **Biege-E-Modullängs/quer [MPa]** | **Anisotropie-Faktor** | **Dynstat -25°C [kJ/m²]** | **Zugfestigkeit [MPa]** |
|---|---|---|---|---|---|---|
| Beispiel 1 | Glass Bubbles: 10 | 1030 | 1010/810 | 1,25 | 12 | 23 |
| | C-Faser: 5 | | | | | |
| Vergleich 2 | Glass Bubbles: 10 | 1160 | 1130/800 | 1,41 | 10 | 21 |
| | Mineralfaser: 17 | | | | | |

Das erfindungsgemäße Beispiel 1 zeigt, dass durch die Verwendung von 10 Gew.-% Mikro-Glashohlkugeln und 5 Gew.-% Carbonfasern, bezogen auf das Elastomer, ein Biege-E-Modul von 1010 MPa längs zur Faserrichtung und 810 MPa quer zur Faserrichtung bei einer Rohdichte des Formteils von 1030 kg/m³ erzielt wurde. Wurden anstelle von 5 Gew.-% Carbonfasern 17 Gew.-% Mineralfasern (Vergleichsbeispiel 2) eingesetzt, konnten vergleichbare Biege-E-Moduli erzielt werden. Dies ging allerdings mit einer gegenüber Beispiel 1 mehr als 10%-igen Erhöhung der Dichte einher. Zudem zeigte das Formteil mit einem Faktor von 1,41 eine deutlich höhere Anisotropie, eine schlechtere Tieftemperatur-Zähigkeit sowie eine niedrigere Zugfestigkeit.

Es konnte ein Polyurethanharnstoff-Elastomer bereitgestellt werden, das gegenüber einem nach dem Stand der Technik hergestellten Elastomer bei vergleichbarem Biege-E-Modul eine um mehr als 10% niedrigere Dichte sowie eine deutlich geringere Anisotropie besitzt. Die Tieftemperatur-Zähigkeit und Zugfestigkeit konnten außerdem verbessert werden. Karosserieaußenteile aus dem erfindungsgemäßen Elastomer eignen sich daher hervorragend zur Gewichtseinsparung im Automobilbau. Durch die reduzierte Anisotropie sind die Bauteile aus dem erfindungsgemäßen Elastomer darüber hinaus weniger anfällig für Verzug.

## Patentansprüche

1. Mit Verstärkungsstoffen ausgerüstete Formteile aus Polyurethanharnstoff-Elastomeren mit einem Harnstoffanteil von 70 bis 95 Mol-% und einem Urethananteil von 5 bis 30 Mol-%, jeweils bezogen auf Mol-% eines NCO-Äquivalents erhältlich durch Umsetzung eines Reaktionsgemisches aus einer
A-Komponente aus
A1) aromatischen Diaminen, die zumindest in jeweils einer ortho-Stellung zu den Aminogruppen einen Alkylsubstituenten aufweisen,
A2) einer aliphatischen Komponente bestehend aus mindestens einem Hydroxyl- und/oder primäre Aminogruppen aufweisenden Polyether- und/oder Polyesterpolyol mit einem zahlenmittleren Molekulargewicht von 500 bis 18 000 und einer Funktionalität von 3 bis 8 und
A3) gegebenenfalls Katalysatoren und/oder gegebenenfalls Zusatzstoffen
sowie isocyanatgruppenhaltigem Prepolymer als B-Komponente aus der Reaktion von
B1) einer Polyisocyanatkomponente aus der Gruppe bestehend aus Polyisocyanaten und Polyisocyanatgemischen der Diphenylmethanreihe und verflüssigten Polyisocyanaten der Diphenylmethanreihe mit
B2) mindestens einer Polyolkomponente mit einem zahlenmittleren Molekulargewicht von 500 bis 18 000 und einer Funktionalität von 2,7 bis 8 aus der Gruppe bestehend aus gegebenenfalls organische Füllstoffe enthaltenden Polyetherpolyolen und gegebenenfalls organische Füllstoffe enthaltenden Polyesterpolyolen,
**dadurch gekennzeichnet, dass** die Komponente A und/oder Komponente B hohle, harte Mikrokugeln (C) und Carbonfasern (D) enthält.

2. Formteile nach Anspruch 1, **dadurch gekennzeichnet, dass** es sich bei den hohlen, harten Mikrokugeln (C) um Mikro-Glashohlkugeln handelt.

3. Formteile nach Anspruch 1, **dadurch gekennzeichnet, dass** die Carbonfasern (D) durchschnittliche Faserlängen von 60 bis 200 µm besitzen.

4. Formteile nach Anspruch 1, **dadurch gekennzeichnet, dass** die Carbonfasern (D) durchschnittliche Faserlängen von 90 bis 200 µm besitzen.

5. Formteile nach Anspruch 1, **dadurch gekennzeichnet, dass** die Carbonfasern (D) durchschnittliche Faserlängen von 90 bis 150 µm besitzen.

6. Formteile nach Anspruch 1, **dadurch gekennzeichnet, dass** die Formteile eine Dichte von 0,7 bis 1,1 g/cm³ aufweisen.

7. Formteile nach Anspruch 1, **dadurch gekennzeichnet, dass** die Formteile eine Dichte von 0,8 bis 1,1 g/cm³ aufweisen.

8. Formteile nach Anspruch 1, **dadurch gekennzeichnet, dass** die Formteile eine Dichte von 0,9 bis 1,1 g/cm³ aufweisen.

9. Formteile nach Anspruch 1, **dadurch gekennzeichnet, dass** die Formteile eine Dichte von 0,9 bis 1,0 g/cm³ aufweisen.

10. Formteile nach Anspruch 1, **dadurch gekennzeichnet, dass** die Formteile einen Biege-Elastizitäts-Modul längs zur Faserrichtung von mindestens 600 MPa besitzen.

11. Formteile nach Anspruch 1, **dadurch gekennzeichnet, dass** die Formteile einen Biege-Elastizitäts-Modul längs zur Faserrichtung von mindestens 700 MPa besitzen.

12. Formteile nach Anspruch 1, **dadurch gekennzeichnet, dass** die Formteile einen Biege-Elastizitäts-Modul längs zur Faserrichtung von mindestens 800 MPa besitzen.

13. Formteile nach einem der Ansprüche 1 bis 9, **dadurch gekennzeichnet, dass** die Formteile einen Biege-Elastizitäts-Modul längs zur Faserrichtung von mindestens 900 MPa besitzen.

14. Formteile nach Anspruch 1, **dadurch gekennzeichnet, dass** die Formteile einen Biege-Elastizitäts-Modul längs zur Faserrichtung von mindestens 1000 MPa besitzen.

15. Verwendung der Formteile nach einem der Ansprüche 1 bis 14 als Karosserieaußenteile, Karosserieelemente, flexible Automobilstoßstangen, Kotflügel, Türen, Heckklappen, Front- und Heckschürzen.

## Claims

1. Moldings equipped with reinforcing materials and made of polyurethaneurea elastomers with from 70 to 95 mol% urea content and from 5 to 30 mol% urethane content, based in each case on mol% of an NCO equivalent, obtainable via reaction of a reaction mixture made of an
A component made of
A1) aromatic diamines which at least have an alkyl substituent in each case in an ortho-position with respect to the amino groups,
A2) an aliphatic component composed of at least one polyether polyol and/or polyester polyol which respectively has hydroxy and/or primary amino groups and which has a number-average molecular weight of from 500 to 18 000 and a functionality of from 3 to 8, and
A3) optionally catalysts and/or optionally additives,
and also of, as B component, prepolymer which comprises isocyanate groups and which derives from the reaction of
B1) a polyisocyanate component from the group consisting of polyisocyanates and polyisocyanate mixtures of the diphenylmethane category and liquefied polyisocyanates of the diphenylmethane category with
B2) at least one polyol component with a number-average molecular weight of from 500 to 18 000 and with a functionality of from 2.7 to 8 from the group consisting of polyether polyols optionally comprising organic fillers and polyester polyols optionally comprising organic fillers,
**characterized in that** component A and/or component B comprises hollow rigid microspheres (C) and carbon fibers (D).

2. Moldings according to Claim 1, **characterized in that** the hollow rigid microspheres (C) involve hollow glass microspheres.

3. Moldings according to Claim 1, **characterized in that** the average fiber lengths of the carbon fibers (D) are from 60 to 200 µm.

4. Moldings according to Claim 1, **characterized in that** the average fiber lengths of the carbon fibers (D) are from 90 to 200 µm.

5. Moldings according to Claim 1, **characterized in that** the average fiber lengths of the carbon fibers (D) are from 90 to 150 µm.

6. Moldings according to Claim 1, **characterized in that** the density of the moldings is from 0.7 to 1.1 g/cm³.

7. Moldings according to Claim 1, **characterized in that** the density of the moldings is from 0.8 to 1.1 g/cm³.

8. Moldings according to Claim 1, **characterized in that** the density of the moldings is from 0.9 to 1.1 g/cm³.

9. Moldings according to Claim 1, **characterized in that** the density of the moldings is from 0.9 to 1.0 g/cm³.

10. Moldings according to Claim 1, **characterized in that** the flexural modulus of elasticity of the moldings along the direction of the fibers is at least 600 MPa.

11. Moldings according to Claim 1, **characterized in that** the flexural modulus of elasticity of the moldings along the direction of the fibers is at least 700 MPa.

12. Moldings according to Claim 1, **characterized in that** the flexural modulus of elasticity of the moldings along the direction of the fibers is at least 800 MPa.

13. Moldings according to any of Claims 1 to 9, **characterized in that** the flexural modulus of elasticity of the moldings along the direction of the fibers is at least 900 MPa.

14. Moldings according to Claim 1, **characterized in that** the flexural modulus of elasticity of the moldings along the direction of the fibers is at least 1000 MPa.

15. Use of the moldings according to any of Claims 1 to 14 as bodywork-exterior parts, bodywork elements, flexible bumpers for automobiles, wheel surrounds, doors, tailgates, front aprons and rear aprons.

## Revendications

1. Pièces moulées, munies de matières de renfort, à base d'élastomères-mousses de polyuréthane ayant une teneur en urée de 70 à 95 % en moles et une teneur en uréthane de 5 à 30 % en moles, chaque fois par rapport au % en moles d'un équivalent NCO, pouvant être obtenus par mise en réaction d'un mélange réactionnel constitué d'un
composant A à base
A1) de diamines aromatiques qui comportent au moins un substituant alkyle en chaque fois une position ortho par rapport aux groupes amino,
A2) d'un composant aliphatique consistant en au moins un polyéther- et/ou polyesterpolyol comportant des groupes hydroxy et/ou des groupes amino primaires, ayant une masse moléculaire moyenne en nombre de 500 à 18 000 et une fonctionnalité de 3 à 8 et
A3) éventuellement de catalyseurs et/ou éventuellement d'additifs
ainsi que d'un prépolymère contenant des groupes isocyanate en tant que composant B provenant de la réaction
B1) d'un composant polyisocyanate choisi dans le groupe constitué par des polyisocyanates et des mélanges de polyisocyanates de la série du diphénylméthane et des polyisocyanates liquéfiés de la série du diphénylméthane avec
B2) au moins un composant polyol ayant une masse moléculaire moyenne en nombre de 500 à 18 000 et une fonctionnalité de 2,7 à 8, choisi dans le groupe constitué par des polyétherpolyols contenant éventuellement des charges organiques et des polyesterpolyols contenant éventuellement des charges organiques,
**caractérisées en ce que** le composant A et/ou le composant B contient/contiennent des microsphères (C) dures, creuses et des fibres de carbone (D).

2. Pièces moulées selon la revendication 1, **caractérisées en ce que** pour ce qui est des microsphères (C) dures, creuses il s'agit de microsphères de verre creuses.

3. Pièces moulées selon la revendication 1, **caractérisées en ce que** les fibres de carbone (D) ont des longueurs moyennes de fibre de 60 à 200 µm.

4. Pièces moulées selon la revendication 1, **caractérisées en ce que** les fibres de carbone (D) ont des longueurs moyennes de fibre de 90 à 200 µm.

5. Pièces moulées selon la revendication 1, **caractérisées en ce que** les fibres de carbone (D) ont des longueurs moyennes de fibre de 90 à 150 µm.

6. Pièces moulées selon la revendication 1, **caractérisées en ce que** les pièces moulées présentent une densité de 0,7 à 1,1 g/cm³.

7. Pièces moulées selon la revendication 1, **caractérisées en ce que** les pièces moulées présentent une densité de 0,8 à 1,1 g/cm³.

8. Pièces moulées selon la revendication 1, **caractérisées en ce que** les pièces moulées présentent une densité de 0,9 à 1,1 g/cm³.

9. Pièces moulées selon la revendication 1, **caractérisées en ce que** les pièces moulées présentent une densité de 0,9 à 1,0 g/cm³.

10. Pièces moulées selon la revendication 1, **caractérisées en ce que** les pièces moulées présentent un module d'élasticité en flexion longitudinalement par rapport au sens de la fibre d'au moins 600 MPa.

11. Pièces moulées selon la revendication 1, **caractérisées en ce que** les pièces moulées présentent un module d'élasticité en flexion longitudinalement par rapport au sens de la fibre d'au moins 700 MPa.

12. Pièces moulées selon la revendication 1, **caractérisées en ce que** les pièces moulées présentent un module d'élasticité en flexion longitudinalement par rapport au sens de la fibre d'au moins 800 MPa.

13. Pièces moulées selon l'une quelconque des revendications 1 à 9, **caractérisées en ce que** les pièces moulées présentent un module d'élasticité en flexion longitudinalement par rapport au sens de la fibre d'au moins 900 MPa.

14. Pièces moulées selon la revendication 1, **caractérisées en ce que** les pièces moulées présentent un module d'élasticité en flexion longitudinalement par rapport au sens de la fibre d'au moins 1 000 MPa.

15. Utilisation des pièces moulées selon l'une quelconque des revendications 1 à 14, en tant que pièces extérieures de carrosseries, éléments de carrosseries, pare-chocs flexibles d'automobiles, ailes, portières, hayons, jupes avant et arrière.
